**Europäisches Patentamt**

**European Patent Office**

**Office européen des brevets**

(11) Veröffentlichungsnummer : **0 374 611 B1**

(12) # EUROPÄISCHE PATENTSCHRIFT

(45) Veröffentlichungstag der Patentschrift :
**27.05.92 Patentblatt 92/22**

(51) Int. Cl.⁵ : **G01B 7/00,** G01B 5/00,
B23Q 1/26, G01B 21/04

(21) Anmeldenummer : **89122607.8**

(22) Anmeldetag : **07.12.89**

(54) **Tastkopf vom schaltenden Typ.**

(30) Priorität : **22.12.88 DE 3843125**

(43) Veröffentlichungstag der Anmeldung :
**27.06.90 Patentblatt 90/26**

(45) Bekanntmachung des Hinweises auf die
Patenterteilung :
**27.05.92 Patentblatt 92/22**

(84) Benannte Vertragsstaaten :
**CH DE FR GB IT LI**

(56) Entgegenhaltungen :
**EP-A- 0 163 070**
**DE-A- 3 715 698**
**DE-A- 3 804 111**

(73) Patentinhaber : **Firma Carl Zeiss**
**W-7920 Heidenheim (Brenz) (DE)**
(84) **CH DE FR IT LI**

Patentinhaber : **CARL ZEISS-STIFTUNG**
**HANDELND ALS CARL ZEISS**
**W-7920 Heidenheim (Brenz) (DE)**
(84) **GB**

(72) Erfinder : **Ähnelt, Hans-Peter**
**Pulfrichstrasse 16**
**W-7082 Oberkochen (DE)**
Erfinder : **Wirth, Michael**
**Egerlandstrasse 1**
**W-7080 Aalen (DE)**

EP 0 374 611 B1

## Beschreibung

Die Erfindung bezieht sich auf einen Tastkopf vom schaltenden Typ mit einem Lager für den beweglichen, das Tastelement tragenden Teil des Tastkopfes, wobei der bewegliche Teil durch ein nachgiebiges, in Richtung auf das Lager wirkendes Vorspannmittel in definierter Nullage in dem Lagr gehalten ist.

Tastköpfe vom schaltenden Typ besitzen ein Lager, das die Nullage des beweglichen, das Tastelement tragenden Teils des Tastkopfes mit hoher Genauigkeit festlegt. In dieses Lager, das im allgemeinen ein isostatisches Dreipunktlager ist, wird der auslenkbare Teil des Tastkopfes durch ein Vorspannorgan, in der Regel eine Feder, mit definierter Kraft hineingedrückt bzw. hineingezogen. Tastköpfe diesen Typs sind beispielsweise in der US-PS 41 77 568 beschrieben.

Tastköpfe vom schaltenden Typ werden überwiegend in vertikaler Einbaulage eingesetzt. Hierbei wirkt die Kraft der das Lager vorspannenden Feder in Richtung der Schwerkraft und belastet die drei Lagerstellen gleichmäßig.

Es ist auch bereits bekannt, schaltende Tastköpfe an einer sogenannten Dreh-Schwenkeinrichtung zu befestigen und dann in unterschiedlicher Orientierung entsprechend den zu vermessenden Bohrungen am Werkstück auszurichten. Dies ist jedoch nur dann möglich, wenn die Vorspannkraft sehr viel größer als das Gewicht des auslenkbaren Taststifts ist. Andernfalls würde dieser während der Schwenkbewegung des Tastkopfes die durch das Lager vorgegebene Nullage verlassen. Denn in horizontaler Ausrichtung wirken die Gewichtskräfte quer zum Lager und drücken den Taststift bzw. dessen Träger aus dem Lager.

Andererseits ergeben sich jedoch infolge der für die waagerechte Ausrichtung nötigen, höheren Vorspannung des Lagers größere Antastkräfte und außerdem nimmt die Reibung im Lager zu. Eine erhöhte Reibung verschlechtert in nicht zu vernachlässigender Weise die Genauigkeit, mit der der Taststift nach einem Antastvorgang wieder in seine Nullage zurückkehrt. Hohe Antastkräfte sind außerdem generell für viele Meßaufgaben unerwünscht.

Während man bei Tastköpfen mit relativ kleinem Durchmesser, deren Taststift nur eine geringe Masse besitzt, das angesprochene Problem durch eine Erhöhung der Vorspannkraft in gewissen Grenzen noch ausgleichen kann, ist dies für schaltende Tastköpfe größerer Bauart nicht mehr möglich.

Es ist die Aufgabe der vorliegenden Erfindung, einen Tastkopf vom schaltenden Typ zu schaffen, der Taststifte mit relativ großer Masse tragen kann und insbesondere ohne Einbußen bezüglich der Reproduzierbarkeit seines Lagers auch in waagerechter Einbaulage verwendbar ist.

Diese Aufgabe wird bei einem Tastkopf der eingangs genannten Art gemäß dem kennzeichnenden Teil des Anspruchs 1 dadurch gelöst, daß der Tastkopf eine berührungslos arbeitende Einrichtung zur Kompensation von senkrecht zur Vorspannrichtung wirkenden Komponenten der Gewichtskraft des beweglichen Teils enthält.

Dadurch wird erreicht, daß die Summe aller den Taststift bzw. dessen Träger in seinem Lager haltenden Kräfte ebenso wie in der bisherigen vertikalen Einbaulage allein in Richtung auf die Lagerstellen wirken. Es kann deshalb ohne Einbuße bezüglich der Wiederholgenauigkeit des Tasters mit kleinen Vorspannkräften und demzufolge kleinen Antastkräften gearbeitet werden. Da die Einrichtung zur Kompensation der Gewichtskraft berührungslos arbeitet, sind außerdem zusätzliche Reibungskräfte vermieden, wie sie andernfalls auftreten würden, wenn beispielsweise die Kompensation der Gewichtskraft durch zusätzliche, am Taststiftträger angreifende Federn vorgenommen würde.

Zur berührungslosen Kompensation der Gewichtskraft kann beispielsweise ein Magnetlager oder ein Luftlager verwendet werden. In beiden Fällen läßt sich das Lager konstruktiv so auslegen, daß durch diese zusätzliche Einrichtung die Auslenkbewegung des Taststifts bzw. Taststiftträgers im Zuge des Antastvorganges nicht behindert wird.

Wenn zusätzlich die Spaltbreite des betreffenden Lagers einstellbar ist, dann kann die Kompensation der Gewichtskraft in der Ebene senkrecht zur Vorspannrichtung abhängig vom Gewicht der angesetzten Taststiftkombination oder abhängig von der Orientierung des Tastkopfes d.h. abhängig von seiner Winkellage gegen die Vertikale erfolgen.

Nachfolgenden ist die Erfindung anhand der in dem beigefügten Zeichnungen, dargestellten Ausführungsbeispielen beschrieben.

Figur 1 stellt ein erstes Ausführungsbeispiel des erfindungsgemäßen Tastkopfs teils im Schnitt, teils in Seitenansicht dar;

Figur 2 zeigt einen im Vergleich zur Figur 1 alternatives Ausführungsbeispiel, ebenfalls teils im Schnitt und teils in Seitenansicht.

Figur 3 ist die Schnittzeichnung eines weiteren Ausführungsbeispiels des Tastkopfes in der Ebene senkrecht zur Vorspannrichtung;

Figur 4 ist eine vereinfachte Skizze, die den Tastkopf nach Fig. 3 in unterschiedlicher Orientierung zeigt.

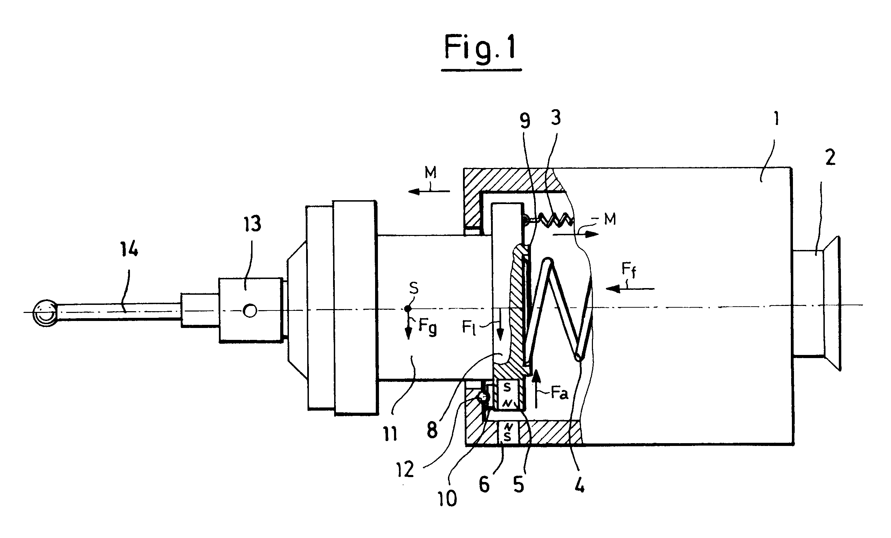

Der in Figur 1 dargestellte Tastkopf besitzt ein zylindrisches Gehäuse (1), das stirnseitig mit einer Aufnahme (2) versehen ist, mit der der Tastkopf am Meßarm einer hier nicht dargestellten Koordinatenmeßmaschine befestigt werden kann. An dem der Aufnahme (2) entgegengesetzten Ende trägt das Gehäuse (1) auf der Innenseite eines zylindrischen Bundes ein aus drei Kugelpaaren bestehendes Lager, auf dem der bewegliche Teil (11) des Tastkopfes mit seiner Lagerplatte (8) selbstzentrierend aufliegt. In der Darstellung nach Figur 1 ist nur eine, nämlich die Kugel (12) der drei Kugelpaare des Lagers zu sehen. In jeder der drei um 120° bezüglich der eingezeichneten Längsachse des Tastkopfes versetzt angeordneten, aus den Kugelpaaren gebildeten Kerben liegt jeweils einer von drei an der Unterseite der Platte (8) angebrachten Zylinderkörpern (10). Diese an sich bekannte Anordnung aus Kugelpaaren und Zylinderkörpern reproduziert die Nulllage des mit (14) bezeichneten Taststifts des Tastkopfes, der über eine Aufnahme (13) am beweglichen Taststiftträger (11) befestigt ist, mit hoher Genauigkeit.

Der Taststiftträger (11) bzw. die in dem Dreipunktlager liegende Halteplatte (8) ist durch eine Schraubenfeder (4) vorgespannt. Die Vorspannkraft (Ff) wirkt hierbei in Richtung zu der gestrichelt eingezeichneten Längsachse des Tastkopfes.

In der dargestellten waagerechten Einbaulage wird das Lager im Tastkopf zusätzlich durch Gewichtskräfte und Momente in Richtungen belastet, die nicht mit der Taststiftlängsachse zusammenfallen. So bewirkt die im Schwerpunkt S des beweglichen Teils (11) angreifende Gewichtskraft (Fg) eine Kraftkomponente (Fl) in der Ebene des Dreipunktlagers sowie ein Moment (M), das die beiden nicht dargestellten Lagerpunkte des Dreipunktlagers starker belastet, als die dargestellte, mit (10) und (12) bezeichnete untere Lagerstelle. Diese Kraftkomponenten werden nun durch folgende Mittel kompensiert:

In das untere Ende der Halteplatte (8) des Taststiftträgers ist ein Magnet (5) eingelassen und ein entsprechender Magnet (6) befindet sich auf der gegenüberliegenden Seite im Gehäuse (1) des Tastkopfes. Der Abstand dieser beiden Magnete ist so gewählt, daß die mit gleichnamigen Polen gegenüberliegenden Magnete eine abstoßende Kraft erzeugen, die gerade entgegengesetzt gleich ist der in der Lagerebene wirkenden Kraftkomponente (Fl) des Gewichtsvektors (Fg).

Außerdem ist am oberen Ende der Halteplatte (8) eine das Lager an dieser Stelle entlastende Zugfeder (3) eingehängt, deren Zugkraft entgegengesetzt gleich dem aus der GewichtSkraft (Fg) resultierenden Moment M gewählt ist. Auf diese Weise sind alle Kraftkomponenten kompensiert, die infolge der waagerechten Einbaulage aufgetreten sind, so daß die resultierende Gesamtkraft wiederum nur die Kraft (Ff) der Andruckfeder (4) ist, die den beweglichen Teil (11) des Taststifts in Richtung der Symmetrieachse in sein Lager drückt.

Weder die Magnete (5,6) noch die Zugfeder (3) behindern die Auslenkbewegung des Teils (11) im Zuge eines Antastvorganges.

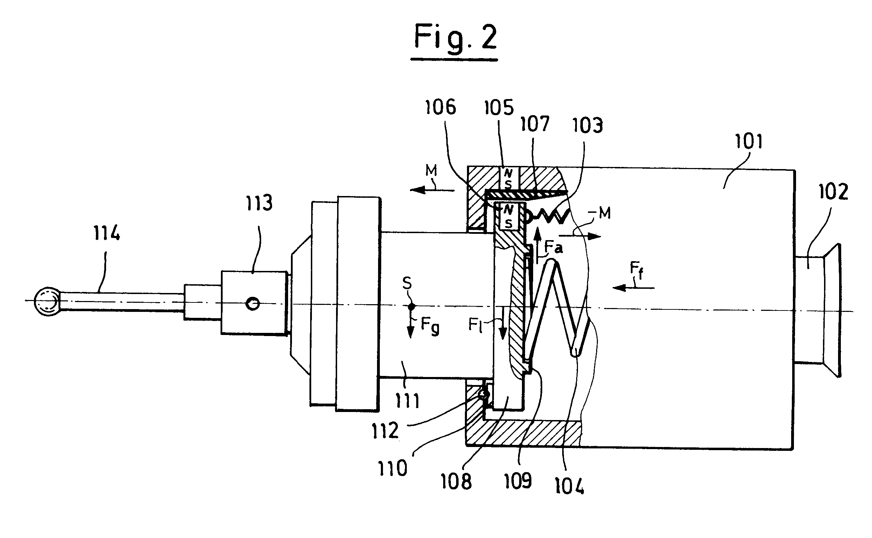

Der Tastkopf im Ausführungsbeispiel nach Figur 2 unterscheidet sich von dem nach Figur 1 allein dadurch, daß anstelle der abstoßenden Magnete nunmehr am oberen Ende des waagerecht eingebauten Tastkopfes (101) zwei Zugmagnete (105,106) im Gehäuse (101) bzw. in der Halteplatte (108) eingebaut sind. Die übrigen Teile des Tastkopfes besitzen die gleiche Funktion und sind mit einer um 100 höheren Bezugsziffer versehen. Sie werden an dieser Stelle nicht nochmals erklärt.

Zusätzlich ist zwischen den beiden Magneten (105) und (106) ein Abstandshalter (107) aus nichtmagnetischem Material, beispielsweise aus Plastik, eingesetzt. Dieser Abstandshalter (107) dient dazu, ein Aneinanderkleben der Magnete (105) und (106) aneinander zu verhindern. Er stellt somit sicher, daß nach jedem Antastvorgang der bewegliche Teil (111) des Tastkopfes wieder in sein Lager zurückkehrt.

Für den Fall, daß an die in den Figuren 1 und 2 dargestellten Tastköpfe andere Taststifte mit unterschiedlichem Gewicht angesetzt werden sollen, kann es zweckmäßig sein, den Abstand zwischen den Magneten (5) und (6) bzw. (105) und (106) einstellbar vorzusehen. Dies kann beispielsweise dadurch geschehen, daß die Magnete (6) bzw. (106) in einer Justierschraube aufgenommen sind.

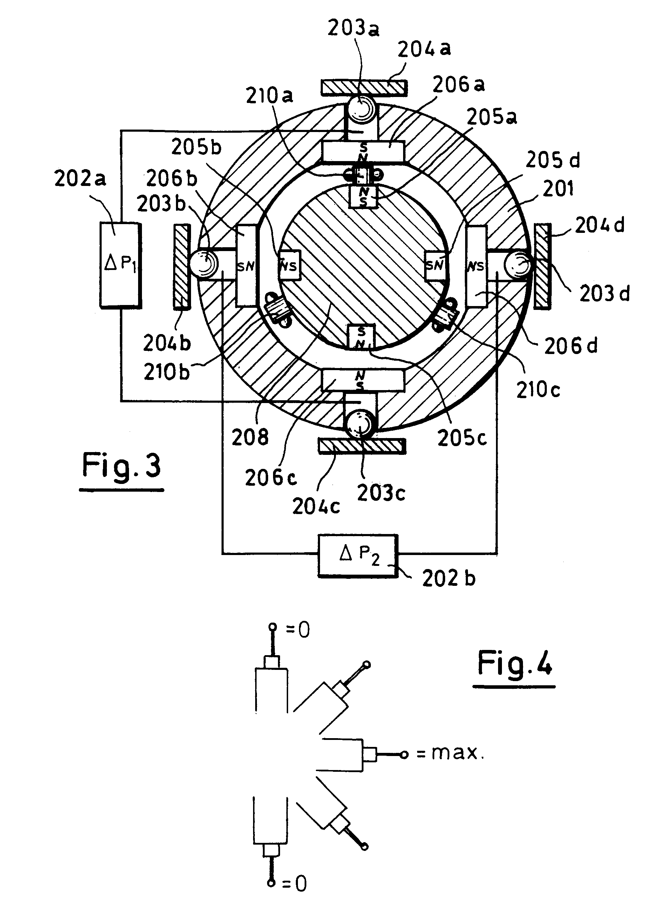

Eine Einstellung des Abstandes ist auch für den Fall vorzusehen, daß der Tastkopf beispielsweise an einem Dreh-Schwenkgelenk befestigt ist und in unterschiedlicher Orientierung benutzt wird. Hier ist die Größe der Kraftkomponente in der Ebene senkrecht zur Vorspannrichtung, die von dem Magnetlager kompensiert werden soll, abhängig von der Winkellage des Tastkopfes gegen die Vertikale und variiert zwischen einem Maximalwert bei waagerechter Ausrichtung des Tastkopfes und dem Wert 0 bei senkrechter Ausrichtung, wie dies in Fig. 4 skizziert ist.

Ein Ausführungsbeispiel, das die Einstellung der Kompensationskraft abhängig von der Ausrichtung des Tastkopfes ermöglicht, ist in Fig. 3 dargestellt. Dieses Ausführungsbeispiel stellt außerdem sicher, daß die Kompensation auch bei beliebiger Drehlage des Tastkopfes um seine Längsachse erfolgen kann.

Dazu ist im nicht dargestellten Gehäuse des Tastkopfes ein schwimmend gelagerter Ring (201) vorgesehen, der vier um 90° versetzt angeordnete Bohrungen aufweist, in denen jeweils eine Kugel (203a-d) geführt ist. Diese Kugeln (203a-d) stützen sich nach außen gegen ebene Widerlager (204a-d) im Tastkopfgehäuse ab. Nach Innen sind die Bohrungen durch vier eingesetzte Magnete (206a-d) abgeschlossen. Diesen Magneten (206a-d) liegen vier gegenpolig angeordnete Magnete im beweglichen Taststiftträger (208) gegenüber. In der Schnittdarstellung nach Fig. 3 ist auch das Dreipunktlager (210a-c) zu sehen, mit dem der Taststiftträger im Tastergehäuse aufliegt.

Je zwei gegenüberliegende Bohrungen im Ring (201) sind durch nicht näher dargestellte Kanäle mit Ventilen (202a und 202b) verbunden, mit denen sich von der Maschinensteuerung des Koordinatenmeßgerätes Druckdifferenzen $\Delta P1$ und $\Delta P2$ in den Bohrungen einstellen läßt. Aufgrund der jeweils eingestellten Druckdifferenz verschiebt sich der Ring (201) in der gewünschten Weise gegenüber dem beweglichen Taststiftträger (208). Dadurch verändern sich die Lagerspalte der Magnetlager und die von den Magneten auf das Teil (208) ausgeübten Kräfte. Durch eine geeignete Steuerung der Druckdifferenzen $\Delta P1$ und $\Delta P2$ läßt sich somit die Kompensationskraft quer zur Vorspannrichtung des Lagers (210a-c) abhängig von der Ausrichtung des Tastkopfes nach Betrag und Richtung in der Ebene des Lagers einstellen. Hierbei wird der Betrag der Gewichtskraft durch den absoluten Betrag der beiden Druckdifferenzen $\Delta P1$ und $\Delta P2$ und die Richtung der Kompensationskraft in der Lagerebene durch das Verhältnis $\Delta P1/\Delta P2$ der Druckdifferenzen bestimmt.

**Patentansprüche**

1. Tastkopf (1) vom schaltenden Typ mit einem Lager (10,12) für den beweglichen, das Tastelement tragenden Teil (11) des Tastkopfes, wobei der bewegliche Teil durch ein nachgiebiges, in Richtung auf das Lager wirkendes Vorspannmittel (4) in definierter Nullage in dem Lager gehalten ist, dadurch gekennzeichnet, daß der Tastkopf (1) eine berührungslos arbeitende Einrichtung (5/6) zur Kompensation von senkrecht zur Vorspannrichtung (Ff) wirkenden Komponenten (Fl) der Gewichtskraft (Fg) des beweglichen Teils (11) enthält.

2. Tastkopf nach Anspruch 1, dadurch gekennzeichnet, daß die Einrichtung ein Magnetlager (5,6;105,106) ist, das auf den beweglichen Teil des Tastkopfes eine senkrecht zur Vorspannrichtung (Ff) gerichtete Kraft (Fa) ausübt.

3. Tastkopf nach Anspruch 2, dadurch gekennzeichnet, daß das Magnetlager aus zwei einander abstoßenden Magneten (5,6) besteht.

4. Tastkopf nach Anspruch 2, dadurch gekennzeichnet, daß das Magnetlager ein Zugmagnet (105,106) ist und zwischen den einander anziehenden Teilen ein unmagnetischer Abstandshalter (107) angeordnet ist.

5. Tastkopf nach Anspruch 1, dadurch gekennzeichnet, daß die von der Einrichtung (201-206) auf den beweglichen Teil (208) ausgeübte Kompensationskraft abhängig von der Ausrichtung des Tastkopfes einstellbar ist.

6. Tastkopf nach Anspruch 5, dadurch gekennzeichnet, daß die Einrichtung (201-206) Magnetlager (205/206) enthält, deren Spaltbreite einstellbar ist.

7. Tastkopf nach Anspruch 6, dadurch gekennzeichnet, daß die beiden Teile des Magnetlagers (205/206) jeweils in dem beweglichen Teil (208) des Tastkopfes und in einem schwimmend gelagerten Einstellring (201) im Gehäuse des Tastkopfes aufgenommen sind.

**Claims**

1. A probe head (1) of the switching type having a bearing (10, 12) for the movable part (11) of the probe head, which carries the probe element, the movable part being held in a defined null position in its bearing by resilient loading means (4) acting in the direction toward the bearing, characterized by the fact that the probe head (1) contains a contact free operating device (5, 6) for compensating components (Fl) of the weight (Fg) of the movable part (11) which components act perpendicular to the direction (Ff) of resilient loading.

2. A probe head according to Claim 1, characterized by the fact that the device is a magnetic bearing (5, 6; 105, 106) exerting on the movable part of the probe head a force (Fa) directed perpendicular to the direction (Ff) of resilient loading.

3. A probe head according to Claim 2, characterized by the fact that the magnetic bearing consists of two spaced magnets (5, 6) which are poled for mutual repulsion.

4. A probe head according to Claim 2, characterized by the fact that the magnetic bearing consists of two spaced magnets (105, 106) which are poled for mutual attraction and further comprising a non-magnetic spacer (107) retained between said magnets.

5. A probe head according to Claim 1, characterized by the fact that the compensation force exerted by the device (201-206) can be adjusted as a function of the orientation of the probe head.

6. A probe head according to Claim 5, characterized by the fact that said device (201-206) includes magnetic bearings (205-206) having a gap width which is adjustable.

7. A probe head according to Claim 6, characterized by the fact that the two elements (205-206) of the magnetic bearing are respectively carried by the movable part (208) of the probe head and by a bearing-adjustment ring (201) within the housing of the probe head, said adjustment ring being free to float.

## Revendications

1. Palpeur (1) de type par tout ou rien ou de type commutateur, possédant un appui (10, 12) pour la partie mobile (11) du palpeur, portant l'élément de palpage, partie mobile qui est maintenue à une position zéro définie dans l'appui par un moyen de précontrainte (4) élastique, agissant en direction de l'appui, caractérisé en ce que le palpeur (1) contient un dispositif (5/6) fonctionnant sans contact pour compenser des composantes (Fl) perpendiculaires à la direction de précontrainte (Ff) de la force de pesanteur (Fg) de la partie mobile (11).

2. Palpeur selon la revendication 1, caractérisé en ce que le dispositif est un palier magnétique (5, 6; 105, 106) qui exerce sur la partie mobile du palpeur une force (Fa) de direction perpendiculaire à la direction de précontrainte (Ff).

3. Palpeur selon la revendication 2, caractérisé en ce que le palier magnétique est formé de deux aimants (5, 6) qui se repoussent mutuellement.

4. Palpeur selon la revendication 2, caractérisé en ce que le palier magnétique comporte un aimant d'attraction (105, 106) et une pièce d'écartement (107) amagnétique est placée entre les parties s'attirant mutuellement.

5. Palpeur selon la revendication 1, caractérisé en ce que la force de compensation exercée par le dispositif (201-206) sur la partie mobile (208) est réglable en fonction de l'orientation du palpeur.

6. Palpeur selon la revendication 5, caractérisé en ce que le dispositif (201-206) contient des paliers magnétiques (205/206) dont la largeur de jeu est réglable.

7. Palpeur selon la revendication 6, caractérisé eu ce que les deux parties du palier magnétique (205/206) sont disposées respectivement dans la partie mobile (208) du palpeur et dans un anneau de réglage (201) monté flottant dans le boîtier du palpeur.

# Fig.1

EP 0 374 611 B1

# Fig.2

203a
204a
210a
206a
205a
205b
202a
206b
205d
203b
201
204d
ΔP₁
203d
204b
206d
210b
210c
208
205c
206c
210c
Fig.3
206c
203c
204c
ΔP₂
202b

Fig.4

= 0

= max.

= 0